# EUROPÄISCHE PATENTSCHRIFT

(11) **EP 0 665 074 B1**
(45) Veröffentlichungstag und Bekanntmachung des Hinweises auf die Patenterteilung: **09.12.1998**
(21) Anmeldenummer: 95100831.7
(22) Anmeldetag: 23.01.1995
(51) Int. Cl.: B23B 19/02, B23Q 1/25

(54) **Spindelanordnung an einer Werkzeugmaschine**
Spindle arrangement at a machine tool
Arrangement de l'arbre dans une machine-outil

(30) Priorität: 01.02.1994 DE 4402948
(43) Veröffentlichungstag der Anmeldung: 02.08.1995
(73) Patentinhaber: DS Technologie Werkzeugmaschinenbau GmbH, 41236 Mönchengladbach (DE)
(72) Erfinder: Werheid, Franz, Dipl.-Ing., D-53894 Mechernich (DE); Lasch, Thorsten, Dr.-Ing., D-41068 Mönchengladbach (DE)
(74) Vertreter: Rehders, Jochen, Dipl.-Ing.

(56) Entgegenhaltungen:
- DE-A- 2 207 714
- FR-A- 2 384 585
- PATENT ABSTRACTS OF JAPAN vol. 12, no. 286 (M-727) 5. August 1988 & JP-A-63 062 638 (MAKINO MILLING MACH CO LTD) 18. März 1988
- PATENT ABSTRACTS OF JAPAN vol. 12, no. 78 (M-675) 11. März 1988 & JP-A-62 218 046 (MITSUI SEIKI KOGYO KK) 25. September 1987

## Beschreibung

Die Erfindung betrifft eine Spindelanordnung an einer Werkzeugmaschine gemäß dem Oberbegriff des Patentanspruchs 1 und wie aus DE-A-2 207 714 bekannt. Eine Spindelanordnung dieser Art wird z. B. an einer Portal-Senkrecht-Fräsmaschine oder einer Waagerecht-Fräsmachine verwendet.

Portal-Senkrecht-Fräsmaschinen, wie sie beispielsweise in der DE-A-2 207 714 beschrieben sind, weisen zwei seitlich von einer um eine senkrechte Achse drehbaren Planscheibe angeordnete Ständer auf, die mittels eines Querhauptes miteinander verbunden sind. Unterhalb des Querhauptes ist senkrecht verfahrbar ein Querbalken angeordnet, der als Träger für einen quer verfahrbaren Support dient. Dieser Support weist eine Führung für einen senkrechten Spindelbalken bzw. Spindelstößel auf, in dem die Spindel drehbar gelagert ist.

Bei Waagerecht-Fräsmaschinen ist der Support direkt an einem Ständer auf- und abbewegbar angeordnet, während der Ständer auf einem Ständerbett längs einer sich parallel des Ständerbetts erstreckenden Aufspannplatte verfahrbar ist. In dem Support ist waagerecht verschiebbar der Spindelbalken bzw. Spindelstößel angeordnet, der wiederum die drehbar gelagerte Spindel aufnimmt.

Bei beiden Ausführungsformen von Fräsmaschinen ist es bekannt, an dem Ende des Spindelbalkens bzw. Spindelstößels eine Antriebseinheit für die Spindel anzuordnen. Diese Antriebseinheit besteht aus einem Schaltgetriebe und einem Antriebsmotor, die bei größeren Fräsmaschinen ein erhebliches Gewicht aufweisen. Bei den beschriebenen Ständerfräsmaschinen bedeutet dies, daß das Gewicht der Antriebseinheit das Bestreben hat, den Spindelbalken bzw. Spindelstößel zu kippen, so daß die Führungen des Spindelbalkens bzw. Spindelstößels im Support entsprechend kräftig ausgeführt werden müssen.

Bei den vorbeschriebenen Senkrecht-Fräsmaschinen wirkt sich dieses Kippmoment zwar nicht ganz so stark aus, da es in diesem Fall nur von der aus der Achse der Spindel herausgerückten Anordnung der Antriebseinheit herrührt. Bei den beiden Ausführungsformen lassen sich die Spindelbalken bzw. Spindelstößel nicht mit einer Länge ausführen, wie dies wünschenswert wäre, wenn entsprechend große Werkstücke bearbeitet werden sollen.

Bei den bekannten Fräsmaschinen werden die Antriebseinheiten mit Getriebe außerhalb des Spindelbalkens bzw. Spindelstößels an dessen Ende angeordnet, um eine ausreichende Kühlung der Antriebseinheit zu gewährleisten und eine unerwünschte Erwärmung der Spindel durch die Antriebseinheit zu vermeiden, die bei dem Spindelantrieb mit in dem Spindelbalken angeordneten Planetengetriebe entsprechend der deutschen Patentanmeldung S 39515 Ib/49b oder der FR-A-2 384 585 oder bei einem in einer Spindelführung eingebauten Elektromotor als Direktantrieb für eine hochtourig laufende Spindel gemäß der FR-A-2 481 633 unvermeidlicherweise eintritt.

Eine Direktkühlung der Wälzlager einer senkrechten Spindel ergibt sich demgegenüber aus der JP-A-63 062 638, wo Schmieröl als Kühlmittel über Düsen von oben den Wälzlagern zugeführt, unterhalb der Wälzlager mittels Auffangringen gesammelt und durch Ölbohrungen im Spindelbalken einer Umwälzpumpe zugeführt wird. Die Ölbohrungen dienen nicht der Kühlung sondern nur der Ölrückführung. Diese Einrichtung ist für waagegerechte Spindeln nicht verwendbar.

Bei längeren Spindelbalken bzw. Spindelstößeln ergibt sich des weiteren, daß der Abstand zwischen dem Spindelkopf, an dem das Fräswerkzeug angeordnet ist, und dem Spindelende, an dem die Antriebseinheit angreift, so lang wird, daß sich eine große Elastizität im Ahtriebsstrang ergibt, was zu unerwünschten Torsionsschwingungen und daraus folgend zu einer Verminderung der Bearbeitungsqualität führen kann.

Der Erfindung liegt die Aufgabe zugrunde, bei einer Spindelanordnung an einer Werkzeugmaschine, die einen großen Verfahrweg der Spindel gewährleistet, die mit einer an einer langen Spindel angreifenden Antriebseinheit verbundenen unerwünschten Torsionsschwingungen und eine nachteilige Erwärmung der Spindel zu vermeiden.

Ausgehend von dieser Aufgabenstellung wird eine Spindelanordnung an einer Werkzeugmaschine mit einem an einem Ständer oder Querbalken verfahrbaren Support, einem in dem Support verschiebbar angeordneten Spindelbalken bzw. Spindelstößel und einer in dem Spindelbalken bzw. Spindelstößel drehbar gelagerten Spindel vorgeschlagen, bei der erfindungsgemäß in dem Spindelbalken und koaxial zur Spindel ein mit der Spindel gekuppeltes Getriebe und ein koaxial zur Spindel und dem Getriebe in dem Spindelbalken bzw. Spindelstößel angeordneter, mit dem Getriebe gekuppelter Antriebsmotor und ein Kühlkreislauf wenigstens für die Spindel vorgesehen sind, wobei der Kühlkreislauf im Spindelbalken bzw. Spindelstößel angeordnet ist und aus um die Spindel herum angeordneten Kühlmittelkanälen mit einer Kühlmittelzufuhr im Bereich des Spindelkopfs und einer Kühlmittelableitung im Bereich des Spindelendes besteht.

Bei der erfindungsgemäßen Anordnung der Antriebseinheit aus dem Getriebe und dem Antriebsmotor in dem Spindelbalken bzw. Spindelstößel läßt sich der Spindelbalken bzw. Spindelstößel so lang, wie es erforderlich ist oder gewünscht wird, ausbilden, ohne daß die Spindel entsprechend verlängert werden muß, da sich das Getriebe und der Antriebsmotor im Spindelbalken bzw. Spindelstößel so nahe am Spindelende anordnen lassen, wie es sich aus der günstigsten Länge der Spindel ergibt.

Die Spindel läßt sich sehr kurz und steif gestalten, so daß sich keine nachteiligen Elastizitäten im Antriebsstrang ergeben. Vorteilhaft ist auch, daß sich der Spindelbalken bzw. Spindelstößel im Support hydrostatisch führen läßt, wodurch gegenüber den üblichen Wälzumlauf- bzw. Gleitführungen eine größere Steifigkeit und gute Dämpfung in der Führung erreicht werden kann.

Durch den Kühlkreislauf wird die im Bereich der Spindellager entstehende Wärme sowie die vom Getriebe und Antriebsmotor in die Spindel un den Spindelbalken bzw. Spindelstößel eingebrachte Wärme abgeführt, so daß sich keinerlei Auswirkungen auf die Bearbeitungsgenauigkeit und die Führung des Spindelbalkens bzw. Spindelstößels ergeben.

Vorzugsweise kann das Getriebe ein Planetengetriebe sein, das einen Kreisquerschnitt aufweist und dessen Eingangs- und Ausgangswellen koaxial verlaufen.

Um die Spindeldrehzahl den betrieblichen Erfordernissen anpassen zu können, kann ein schaltbares Planetengetriebe vorgesehen sein.

Die Kühlmittelkanäle lassen sich rationell dadurch gewinnen, daß in einer Bohrung des Spindelbalkens bzw. Spindelstößels eine Lagerhülse für die Spindel angeordnet ist, die in ihrer Außenfläche die Kühlmittelkanäle aufweist. Ebenso können die Kühlmittelkanäle auch oder zusätzlich in der Innenfläche der Bohrung im Spindelbalken bzw. Spindelstößel angeordnet sein. Diese Kühlmittelkanäle lassen sich vor der Montage der Lagerhülse im Spindelbalken bzw. Spindelstößel auf der Außenfläche der Lagerhülse bzw. der Innenfläche der Bohrung anbringen und können vorteilhafterweise aus in der Außenfläche der Lagerhülse und/oder der Innenfläche der Bohrung angeordneten, untereinander durch Axialnuten verbundenen Ringnuten oder Spiralnuten bestehen. Nach der Montage der Lagerhülse im Spindelbalken bzw. Spindelstößel ergeben sich geschlossene, entlang der Lagerhülse verlaufende Kanäle, durch die das Kühlmittel von der Kühlmittelzufuhr im Bereich des Spindelkopfes bis zu Kühlmittelableitung im Bereich des Spindelendes geführt wird. Das Kühlmittel kann aus Kühlschmierstoff bestehen, d. h. einer Öl-Wasser-Emulsion mit Zusätzen, der auch zum Kühlen des Fräswerkzeugs verwendet wird.

Die Erfindung wird nachstehend anhand eines in der Zeichnung dargestellten Ausführungsbeispiels des näheren erläutert. In der

Zeichnung zeigen:
- Fig. 1: eine schematische Darstellung einer Portal-Senkrecht-Fräsmaschine mit der erfindungsgemäßen Spindelanordnung,
- Fig. 2: einen senkrechten Schnitt durch den senkrechten Spindelbalken bzw. Spindelstößel von Fig. 1 und
- Fig. 3: einen Querschnitt durch den Spindelbalken bzw. Spindelstößel im Bereich des Supports.

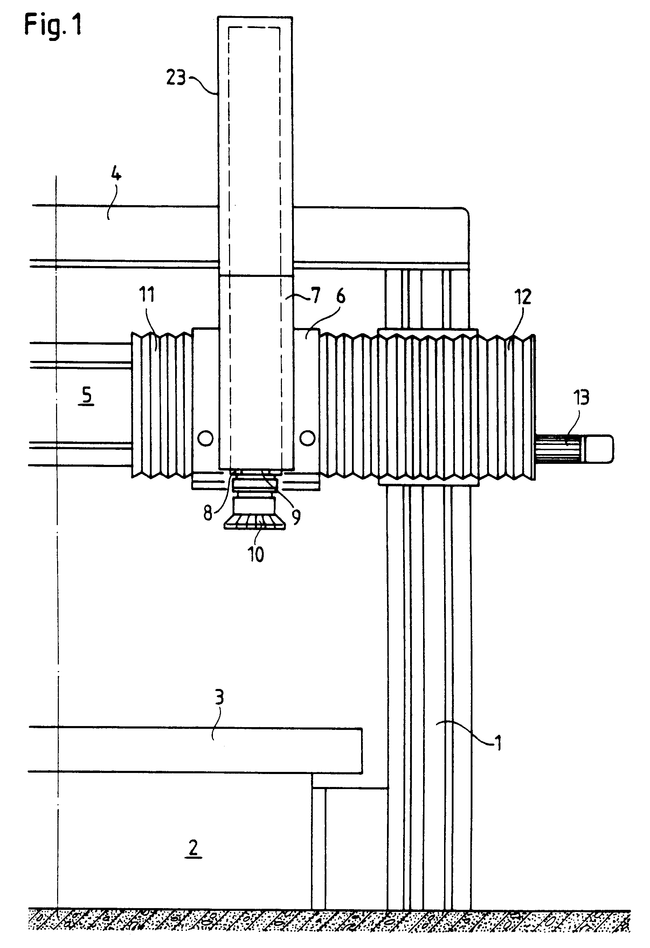

Bei der in Fig. 1 gezeigten Portal-Senkrecht-Fräsmaschine handelt es sich um eine Zwei-Ständer-Maschine, zwischen deren Ständern 1, von denen einer gezeigt ist, eine Aufspannplatte bzw. ein Untersatz 2 mit einer Planscheibe 3 für eine Werkstückaufnahme angeordnet ist. Die beiden Ständer 1 sind am oberen Ende durch ein Querhaupt 4 miteinander fest verbunden. An den Ständern 1 ist senkrecht verfahrbar ein Querbalken 5 angeordnet, auf den waagerecht verfahrbar ein Support 6 angeordnet ist, der seinerseits eine Führung 7 für einen Spindelbalken bzw. Spindelstößel 8 aufweist, die als hydrostatische Führung ausgebildet ist. Oberhalb der Führung 7 ist ein Gehäuse 3 angeordnet, daß das nach oben herausragende, freie Ende des Spindelbalkens bzw. Spindelstößels 8 abdeckt. Aus dem unteren Ende des Spindelbalkens bzw. Spindelstößels 8 ragt eine Spindel 9 heraus, an deren Kopfende ein Fräswerkzeug 10 befestigt ist. Die Führungsbahnen des Querbalkens 5 sind mittels Abdeckungen 11, 12 abgedeckt, die jeweils als in der Länge ausziehbare und zusammenschiebbare Teleskopabdeckungen bzw. Faltbälge ausgebildet sind. Entsprechende Abdeckungen können auch an den Führungsbahnen der Ständer 1 angeordnet sein. Dem Antrieb für die Verschiebung des Supports 6 dient ein Servomotor 13, der an dem einen Ende des Querbalkens angeordnet ist.

Der Spindelbalken bzw. Spindelstößel 8 kann z. B. bei der dargestellten Portal-Senkrecht-Fräsmaschine eine Länge von 6000 mm mit einem quadratischen Querschnitt von 650 x 650 mm aufweisen. Für einen solchen Spindelbalken bzw. Spindelstößel 8 ist eine Führungslänge im Support von 2500 mm erforderlich, so daß sich ein senkrechter Verfahrweg des Spindelbalken bzw. Spindelstößels 8 von etwa 3500 mm ergibt.

Eine schwere Fräsmaschine mit waagerechter Anordnung des Spindelbalkens bzw. Spindelstößels kann in nicht dargestellter Weise einen Ständer aufweisen, der auf einem Ständerbett längs einer Werkstückaufspannplatte verfahrbar ist. An diesem Ständer ist senkrecht verfahrbar ein Support angeordnet, der mit einer waagerechten Führung für den Spindelbalken bzw. Spindelstößel versehen ist.

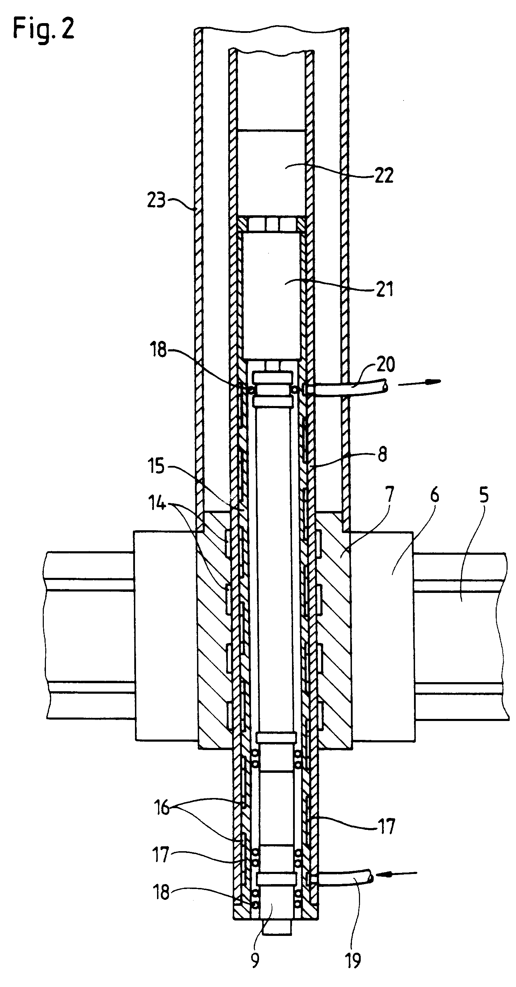

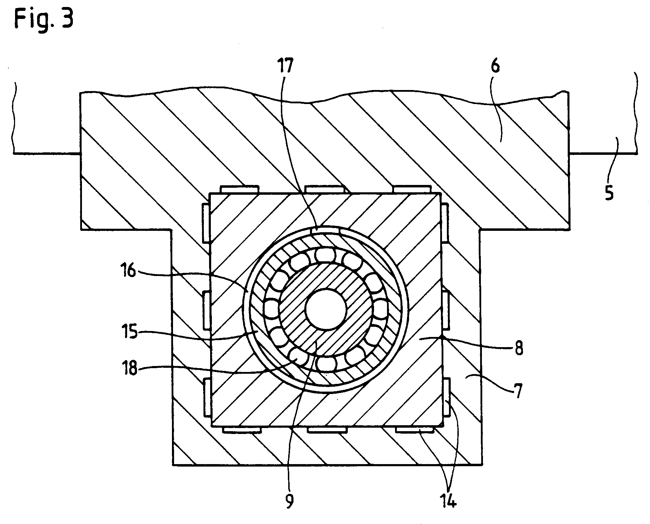

Die mit Bezug auf die Fig. 2 und 3 beschriebenen Einzelheiten gelten sowohl für die dargestellte Portal-Senkrecht-Fräsmaschine als auch für eine Ständerfräsmaschine mit waagerechter Anordnung des Spindelbalkens bzw. Spindelstößels.

Der Spindelbalken bzw. Spindelstößel ist in der Führung 7 am Support 6 verschiebbar angeordnet. Die Führung 7 weist Taschen 14 auf, die die hydrostatische Führung bilden, indem diesen Taschen 14 Öl unter hohem Druck zugeführt wird. Dadurch bildet sich in der Führung 7 entlang den Außenflächen des Spindelbalkens bzw. Spindelstößels 8 ein Ölpolster, das den Spindelbalken bzw. Spindelstößel in der Führung 7 zentriert und durch die Bearbeitung eines Werkstücks entstehende Stöße dämpft.

Im Spindelbalken bzw. Spindelstößel 8 ist eine Lagerhülse 15 angeordnet, die sich vom Kopfende der Spindel 9 bis wenigstens zum Ende der Spindel 9, im dargestellten Beispiel praktisch bis ans Ende des Spindelbalkens bzw. Spindelstößels 8, erstreckt. Die Lagerhülse 15 ist eng in eine entsprechende Bohrung im Spindelbalken bzw. Spindelstößel 8 eingepaßt. In die Außenfläche der Lagerhülse 15 sind Ringnuten 16 eingedreht, die untereinander, jeweils um 180° versetzt, durch Axialnuten 17 verbunden sind. Im Bereich des Kopfendes der Spindel 9 befindet sich eine Kühlmittelzuleitung 19, während sich eine Kühlmittelableitung 20 am entgegengesetzten Ende des Spindelbalkens bzw. Spindelstößels 8 befindet.

Die Spindel 9 ist mittels Wälzlagern 18 in der Lagerhülse 15 gelagert. Ein Planetengetriebe 21 ist koaxial zur Spindel 9 in einer Verlängerung der Lagerhülse 15 angeordnet und mit der Spindel gekuppelt. Bei dem Planetengetriebe 21 handelt es sich um ein mehrstufiges, schaltbares Planetengetriebe, das mit einem dazu koaxial angeordneten Antriebsmotor 22 in Antriebsverbindung steht.

Während der Bearbeitung eines Werkstücks wird Kühlmittel, das vorzugsweise aus Kühlschmierstoff, d. h. einer Öl-Wasser-Emulsion mit Zusätzen, besteht, durch die Kühlmittelzuleitung 19 in die Ringnuten 16, die mittels der Axialnuten 17 miteinander verbunden sind, geleitet und strömt durch die Kühlmittelableitung 20 ab. Bevor das Kühlmittel wieder der Kühlmittelzuleitung 19 mittels einer nicht dargestellten Pumpe zugeführt wird, wird es in einem nicht dargestellten Kühlaggregat gekühlt. Auf diese Weise lassen sich der Spindelbalken bzw. Spindelstößel 8 mit der darin angeordneten Spindel 9 sowie das Getriebe 21 und der Antriebsmotor 22 auf einer gleichmäßigen Temperatur halten.

Statt der durch Axialnuten 17 verbundenen Ringnuten 16 lassen sich in der Lagerhülse 15 auch Spiralnuten anordnen. Ebenso ist es möglich, statt der Nuten 16, 17 in der Lagerhülse 15 entsprechende Nuten in der Bohrung im Spindelbalken bzw. Spindelstößel 8 anzuordnen, oder es lassen sich komplementäre Ringnuten und Axialnuten bzw. Spiralnuten sowohl in dem Spindelbalken bzw. Spindelstößel 8 als auch in der Lagerhülse 15 anordnen, z. B. um den Durchströmquerschnitt zu vergrößern, ohne dadurch den Spindelbalken bzw. Spindelstößel 8 oder die Lagerhülse 15 im Querschnitt allzusehr zu schwächen.

## Patentansprüche

1. Spindelanordnung an einer Werkzeugmaschine mit
- einem an einem Ständer (1) oder Querbalken (5) verfahrbaren Support (6),
- einem in dem Support (6) verschiebbar angeordneten Spindelbalken (8),
- einer in dem Spindelbalken (8) drehbar gelagerten Spindel (9), gekennzeichnet durch :
- einem koaxial zur Spindel (9) in dem Spindelbalken (8) angeordneten, mit der Spindel (8) gekuppelten Getriebe (21),
- einem koaxial zur Spindel (9) und dem Getriebe (21) in dem Spindelbalken (8) angeordneten, mit dem Getriebe (21) gekuppelten Antriebsmotor (22) und
- einem Kühlkreislauf (19, 16, 17, 20) wenigstens für die Spindel, wobei der Kühlkreislauf aus um die Spindel (9) herum angeordneten Kühlmittelkanälen (16, 17) mit einer Kühlmittelzufuhr (19) im Bereich des Spindelkopfs und einer Kühlmittelableitung (20) im Bereich des Spindelendes besteht.

2. Spindelanordnung nach Anspruch 1, dadurch gekennzeichnet, daß das Getriebe (21) ein Planetengetriebe ist.

3. Spindelanordnung nach Anspruch 2, gekennzeichnet durch ein schaltbares Planetengetriebe (21).

4. Spindelanordnung nach einem der Ansprüche 1 bis 3, gekennzeichnet durch eine in einer Bohrung des Spindelbalkens (8) angeordneten Lagerhülse(15 ) und in der Außenfläche der Lagerhülse(15) und/oder der Innenfläche der Bohrung angeordneten Kühlmittelkanälen (16, 17).

5. Spindelanordnung nach Anspruch 4, dadurch gekennzeichnet, daß die Kühlmittelkanäle aus in der Außenfläche der Lagerhülse (15) und/oder der Innenfläche der Bohrung angeordneten untereinander durch Axialnuten (17) verbundenen Ringnuten bestehen (16).

6. Spindelanordnung nach Anspruch 4, dadurch gekennzeichnet, daß die Kühlmittelkanäle aus in der Außenfläche der Lagerhülse und/oder der Innenfläche der Bohrung angeordneten Spiralnuten bestehen.

7. Spindelanordnung nach einem der Ansprüche 1 bis 6 dadurch gekennzeichnet, daß das Kühlmittel aus Kühlschmierstoff besteht.

## Claims

1. Spindle arrangement at a machine tool with
- a support (6), moveable on a stand (1) or along a transverse strut (5),
- a spindle housing (8), slidingly located in the support (6),
- a spindle (9), mounted rotatably in the spindle housing (8),
characterized by:
- a gear (21) arranged coaxially with the spindle (9) within the spindle housing (8) and coupled to the spindle (8),
- a motor-drive (22) arranged coaxially with the spindle (9) and the gear (21) within the spindle housing (8) and
- a cooling circuit (19, 16, 17, 20) at least for the spindle, in which the cooling circuit consists of coolant channels (16, 17) arranged around the spindle (9) with a coolant inlet (19) in the area of the spindle head and a coolant outlet (20) in the area of the end of the spindle.

2. Spindle arrangement as claimed in Claim 1, characterized in that the gear (21) is a planetary gear.

3. Spindle arrangement as claimed in Claim 2, characterized by a switchable planetary gear (21).

4. Spindle arrangement as claimed in one of Claims 1 to 3, characterized by a supporting case (15) located in a boring in the spindle housing (8) and by coolant channels (16, 17) located in the exterior surface of the supporting case (15) and/or in the interior surface of the boring.

5. Spindle arrangement as claimed in Claim 4, characterized in that the coolant channels consist of annular grooves (16) located in the exterior surface of the supporting case (15) and/or in the interior surface of the boring and connected with one another by axial grooves (17).

6. Spindle arrangement as claimed in Claim 4, characterized in that the coolant channels consist of spiral grooves located in the exterior surface of the supporting case and/or in the interior surface of the boring.

7. Spindle arrangement as claimed in one of Claims 1 to 6, characterized in that the coolant consists of cooling lubricant.

## Revendications

1. Agencement de broche dans une machine-outil comportant
- un support (6) déplacable sur un montant (1) ou une poutre transversale (5),
- une barre de broche (8) disposée coulissante dans le support (6),
- une broche (9) montée tournante dans la barre de broche (8),
caractérisé par:
- un engrenage (21) accouplé à la broche (9), disposé coaxialement à la broche (9) dans la barre de broche (8),
- un moteur d'entraînement (22) accouplé à l'engrenage (21), disposé coaxialement à la broche (9) et à l'engrenage (21) dans la barre de broche (8) et
- un circuit de refroidissement (19, 16, 17, 20) au moins pour la broche, le circuit de refroidissement étant constitué de canaux de réfrigérant (16, 17) disposés autour de la broche (9) avec une arrivée de réfrigérant (19) dans la zone de la tête de broche et une sortie de réfrigérant (20) dans la zone de l'extrémité de la broche.

2. Agencement de broche selon la revendication 1, caractérisé en ce que l'engrenage (21) est un engrenage planétaire.

3. Agencement de broche selon la revendication 2, caractérisé par un engrenage planétaire (21) embrayable.

4. Agencement de broche selon l'une des revendications 1 à 3, caractérisé par une douille de palier (15), disposée dans un perçage de la barre de broche (8) et par des canaux de réfrigérant (16, 17) disposés dans la surface extérieure de la douille de palier (15) et/ou la surface intérieure du perçage.

5. Agencement de broche selon la revendication 4, caractérisé en ce que les canaux de réfrigérant sont constitués de rainures annulaires (16) reliées entre elles par des rainures axiales (17) disposées dans la surface extérieure de la douille de palier (15) et/ou la surface intérieure du perçage.

6. Agencement de broche selon la revendication 4, caractérisé en ce que les canaux de réfrigérant sont constitués de rainures en spirales disposées dans la surface extérieure de la douille de palier et/ou la surface intérieure du perçage.

7. Agencement de broche selon l'une des revendications 1 à 6, caractérisé en ce que le réfrigérant est un lubrifiant réfrigérant.
